# NEUE EUROPÄISCHE PATENTSCHRIFT

(11) **EP 1 072 765 B2**
(45) Veröffentlichungstag und Bekanntmachung des Hinweises auf die Entscheidung über den Einspruch: **23.06.2010**
(45) Hinweis auf die Patenterteilung: 30.06.2004
(21) Anmeldenummer: 00115202.4
(22) Anmeldetag: 13.07.2000
(51) Int. Cl.: F01N 3/28, F01N 3/02, F01N 3/023

(54) **Verfahren zur Abscheidung von Feinstpartikeln aus dem Abgas von Brennkraftmaschinen**
Method for separating fine particulate matter from exhaust gas of an internal combustion engine
Procédé pour la séparation de particules fines des gaz d'échappement d'un moteur à combustion interne

(30) Priorität: 26.07.1999 DE 19934932
(43) Veröffentlichungstag der Anmeldung: 31.01.2001
(73) Patentinhaber: MAN NUTZFAHRZEUGE AG, 80995 München (DE)
(72) Erfinder: Döring, Andreas, Dipl.-Ing., 90403 Nürnberg (DE); Jacob, Eberhard, Dr., 82152 Krailing (DE)

(56) Entgegenhaltungen:
- EP-A- 0 277 615
- EP-A- 0 835 684
- WO-A-91/01178
- GB-A- 2 319 191
- GB-A- 2 319 191
- US-A- 4 902 487
- US-A- 5 320 428
- F.STRATMANN AND H.FISSAN: 'Experimental and theoretical study of submiscron particle tran' J.AEROSOL SCI. 01 Januar 1989, Seiten 899 - 902
- C.BERGER,H.HORVATH,W.SCHINDLER: 'the deposition of soot particles from hot gas strams through p' J.AEROSOL SCI. 01 Januar 1995, Seiten 211 - 217

## Beschreibung

Die Erfindung bezieht sich auf ein Verfahren nach dem Gattungsbegriff des Patentanspruches 1.

Aus US-PS 4 902 487 ist ein Verfahren zur Abscheidung von Kohlenstoff bzw. kondensierten Kohlenwasserstoffen aus dem Abgas von Brennkraftmaschinen und ihre nachfolgende Oxidation bekannt. Das NO haltige Abgas der Brennkraftmaschine wird zunächst an einem platinbeschichteten Oxidationskatalysator so behandelt, daß das NO unter Zuhilfenahme des im Abgas enthaltenen Restsauerstoffes zu NO₂ aufoxidiert wird. Das nun mit NO₂ angereicherte Abgas wird stromab über einen Partikelabscheider geleitet. Der Partikelabscheider ist als Filter ausgebildet, an dessen Oberfläche die Partikel gesammelt und mit Hilfe des im Oxidationskatalysators gebildeten NO₂ aufoxidiert werden. Ein Nachteil dieses Verfahrens ist die mögliche Verstopfung des Partikelfilters.Durch den daraus resultierenden erhöhten Gegendruck sinkt die Leistung und der Wirkungsgrad der Brennkraftmaschine.

Demgegenüber liegt der Erfindung die Aufgabe zugrunde ein Verfahren zur Abscheidung von Feinstpartikeln zu entwickeln, welches leistungs- und verbrauchsneutral eingesetzt werden kann.

Gelöst wird diese Aufgabe durch die kennzeichnenden Merkmale des Patentanspruchs.

Bei filterloser Abscheidung wird eine Verstopfung des Filters vermieden.

Durch Thermophorese, in Verbindung mit Konvektion und Diffusion entfallen Druckverluste weitgehend, welche die Wellenleistung und/oder den Verbrauch an Kraftstoff erhöhen.

Das Verfahren und Ausführungsbeispiele zur Durchführung des Verfahrens sind an Hand von Zeichnungen dargestellt. Es zeigt:
- Fig. 1: ein Schema zur Erzeugung von NO₂ und eines stromab nachgeschalteten Partikelabscheider
- Fig. 2: eine Erläuterung des Prinzips der Thermophorese
- Fig. 3: die NO₂ Konzentration und Temperatur an einer gekühlten und katalytisch beschichteten Oberfläche bei integriertem Oxidationskatalysator und Partikelabscheider
- Fig. 4: eine Erläuterung der chemischen Umsetzungen an der Oberfläche des Partikelabscheiders
- Fig. 5: einen Oxidationskatalysator und Partikelabscheider mit gewelltem Abgasrohr als Kühler
- Fig. 6: einen Oxidationskatalysator und Partikelabscheider mit einem Rohrbündelwärmetauscher
- Fig. 7 - 12: strukturierte Oberflächen zur Abscheidung von Partikeln nach dem Prinzip der Konvektion
- Fig. 13, 14: eine verbesserte Ausführung der Struktur zum Abscheiden von Feinstpartikeln
- Fig. 15: eine Integration der Feinstpartikelabscheidung in eine Abgasrückführung (AGR)

Der allgemeine Erfindungsgedanke besteht darin, die Partikel, besonders Feinstpartikel filterlos abzuscheiden, so daß keine Verstopfung des Partikelabscheiders 3 mit den nachteiligen Folgen eintreten kann.

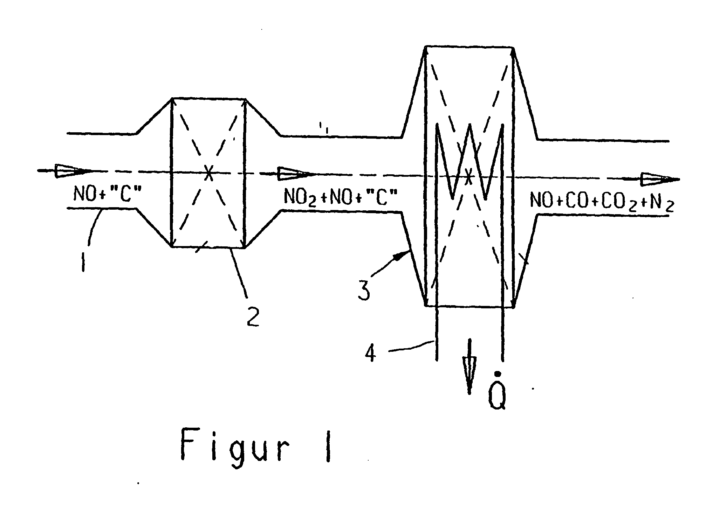

Figur 1 zeigt schematisch die Abscheidung von Feinstpartikeln mittels Thermophorese und deren Oxidation. Vom Abgasrohr 1 wird Abgas mit einem Anteil von NO und einem Restsauerstoffgehalt zunächst durch einen Oxidationskatalysator 2 geleitet. Dieser ist mit Platin beschichtet und oxidiert NO mit Hilfe des Restsauerstoffgehalts zu NO₂ auf. Stromab ist diesem Oxidationskätalysator 2 ein Partikelabscheider 3 nachgeschaltet, in dem Feinstpartikel, bestehend aus Kohlenstoff oder kondensierten Kohlenwasserstoffen, filterlos abgeschieden und an Oberflächen mit NO₂ aufoxidiert werden, wobei die Oberflächen katalytisch beschichtet sein können. Die Oberflächen können durch eine Kühlung 4 Wärme nach außen abführen. Nachteil der üblichen Partikelfilter ist eine mögliche Verstopfung, die den Gegendruck erhöht und zu Leistungsminderung und erhöhtem Kraftstoffverbrauch führt. Beim Partikelabscheider 3 werden die Partikel durch Oxidation beseitigt, eine Verstopfung ist ausgeschlossen.

Erfindungsgemäß werden zur filterlosen Abscheidung die Effekte der Thermophorese, der Konvektion und der Diffusion in Kombination untereinander genutzt.

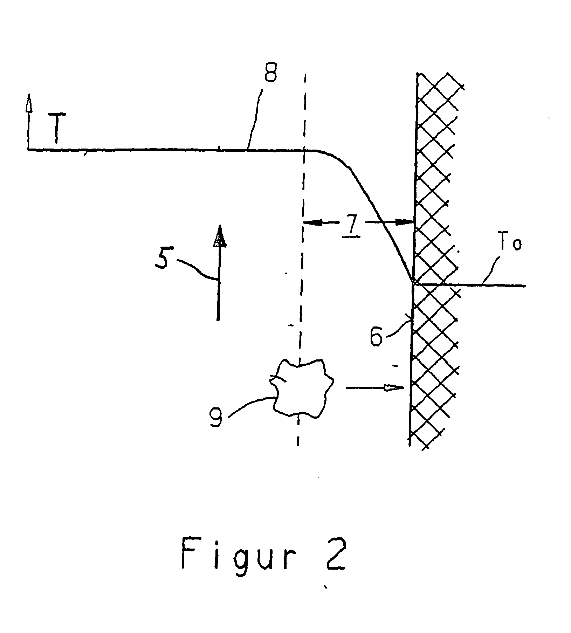

Der Effekt der Thermophorese soll an Hand der Figuren 2 bis 4 kurz erläutert werden.

In Figur 2 strömt heißes Gas, symbolisiert durch Pfeil 5, entlang einer kalten Oberfläche 6. An der kalten Oberfläche 6 bildet sich eine Grenzschicht 7 aus, in der die Temperatur T entsprechend der Kurve 8 vom weiter entfernten heißen Gas auf die Temperatur To der kalten Oberfläche 6 abfällt. Die Gasmoleküle bewegen sich auf Grund ihrer niedrigeren Temperatur in der Grenzschicht 7 langsamer als im heißen Gas. Treffen nun Gasmoleküle auf ein Partikel 9, so übertragen sie einen Impuls, wobei der Impuls der Gasteilchen in der Grenzschicht 7 niedriger ist als der außerhalb der Grenzschicht. Daraus resultiert eine asymmetrische Impulsübertragung auf das Partikel 9, so daß dieses Richtung Oberfläche 6 gedrückt wird, bis es auf diese trifft und sich dort wegen der auftretenden Van-der-Walls-Kräfte anlagert. Der Einfluß der Thermophorese nimmt mit sinkender Partikelgröße und -masse zu, Partikel über 700 nm lassen sich deshalb kaum abscheiden.

Durch den Einsatz neuer Einspritzsysteme, wie z.B. Common Rail oder Pumpe-Düse, kommt es neben dem positiven Effekt der Verminderung der Gesamtpartikelmasse auch zur Erhöhung der Anzahl kleiner Partikel. Da diese Partikel deutlich kleiner als 700 nm sind, kann das thermophoretische Verfahren vorteilhaft zur Partikelreduzierung verwendet werden.

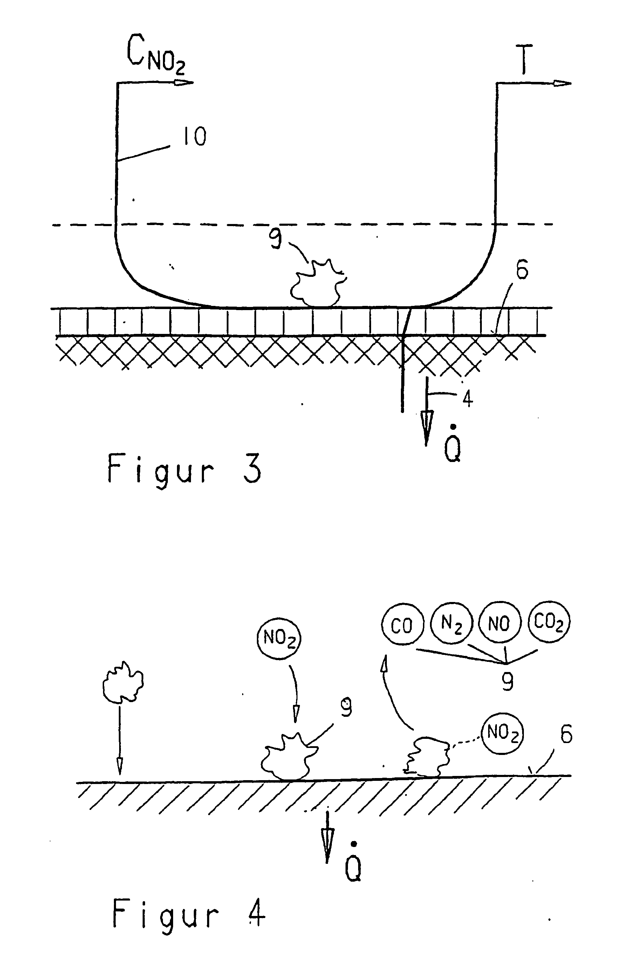

Da die Gleichgewichtskonzentration von NO₂ bei hohen Temperaturen absinkt, geht der Anteil des NO₂ aus rein thermodynamischen Gründen zurück und ist auch durch Katalysatoren nicht mehr anzuheben. Wird im thermodynamisch kontrollierten Bereich das Gas abgekühlt, so lassen sich also höhere NO₂-Anteile erzielen. Hier bietet es sich an, die Bildung von NO₂ und die Partikelabscheidung entsprechend dem Vorrichtungsanspruch 18 funktionell in ein System zu integrieren. Der Oxidationskatalysator 2 und der Partikelabscheider 3 ( Fig. 1 ) werden vereinigt, so daß auch die für die Bildung von NO₂ wirksame Oberfläche durch eine Kühlung 4 in ihrer Temperatur abgesenkt werden kann. Hierbei wird der Kühler mit einem katalytisch aktiven Washcoat, der für die NO-Oxidation zu NO₂ aktiviert ist, beschichtet, so daß nach Fig. 3 zum einen in Wandnähe höhere Gleichgewichtskonzentrationen ( Kurve 10) an NO₂ herrschen und sich gleichzeitig die Partikel 9 durch Thermophorese an der Wand 6 anlagern. Somit steht an der partikelabscheidenden Oberfläche 6, an der NO₂ benötigt wird, eine besonders hohe NO₂-Konzentration für die Verbrennung der Partikel 9 zur Verfügung.

Figur 4 erläutert die chemischen Umsetzungsvorgänge an der Oberfläche 6, welche mit Platin oder platinverwandten Metallen als Katalysator beschichtet sein kann. Ein Partikel 9 ist durch Thermophorese, Konvektion oder Diffusion in Kontakt mit der Oberfläche 6 geraten und setzt sich nun mit dem im Abgas enthaltenen NO₂ zu CO, CO₂, N₂, NO um.

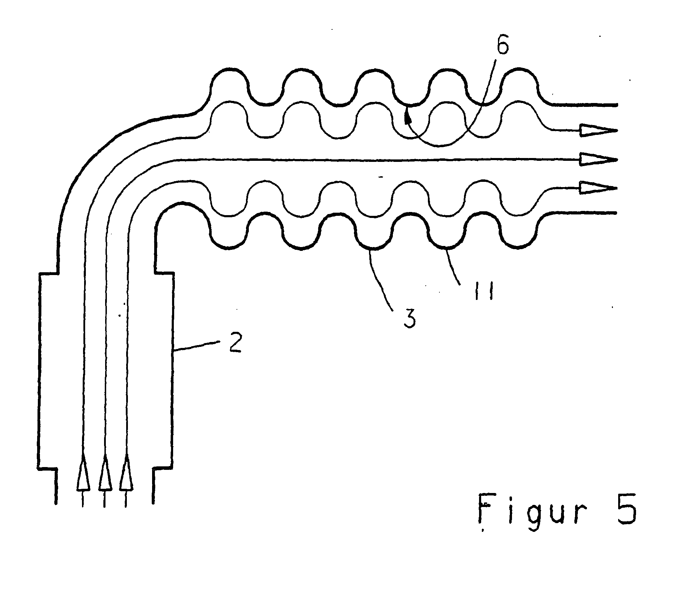

Figur 5 zeigt ein Ausführungsbeispiel für eine Vorrichtung zur Abscheidung von Feinstpartikeln mit Thermophorese. Dem Oxidationskatalysator 2 ist der Partikelabscheider 3 nachgeschaltet, der zur Kühlung mit Wellen 11 versehen ist, so daß die Oberfläche 6 deutlich kühler ist als der Abgasstrom. Dadurch scheiden sich Partikel an der Oberfläche 6 ab und werden dort katalytisch mit dem im Oxidationskatalysator 2 erzeugten NO₂ oxidiert. Ein derart modifiziertes Abgasrohr kann folglich auch als Partikelabscheider dienen.

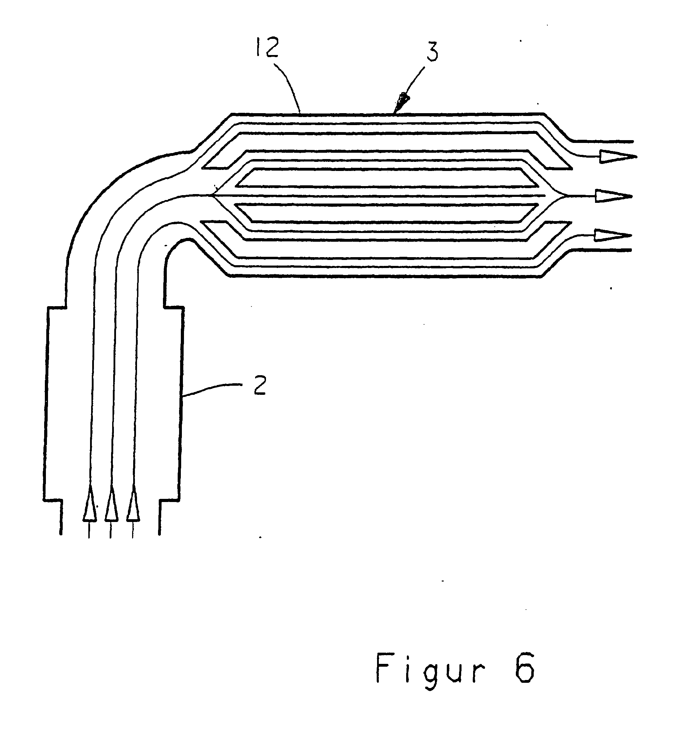

Die Kühlung kann nach Figur 6 auch in einem Röhrenbündelwärmetauscher 12 oder in einem Plattenwärmetauscher erfolgen, der gleichzeitig den Partikelabscheider 3 bildet. Das für die Oxidation von Ruß benötigte NO₂ wird wiederum im vorgeschalteten Oxidationskatalysator 2 gebildet.

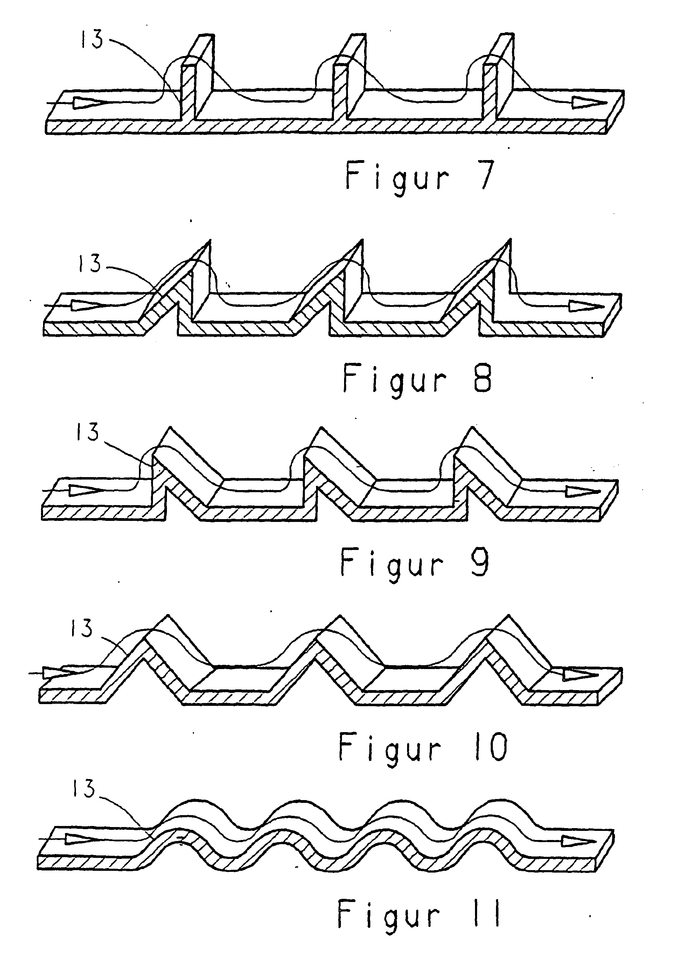

Wird der Partikelabscheider 3 nach dem Prinzip der Konvektion ausgelegt, so weist seine Oberfläche nach den Figuren 7 bis 12 Strukturen 13 auf, so daß die Partikel ständig zu Oberflächenkontakten gezwungen werden und sich an den Oberflächen der Strukturen 13 abscheiden und dort katalytisch mit Hilfe des NO₂ aufoxidiert werden.

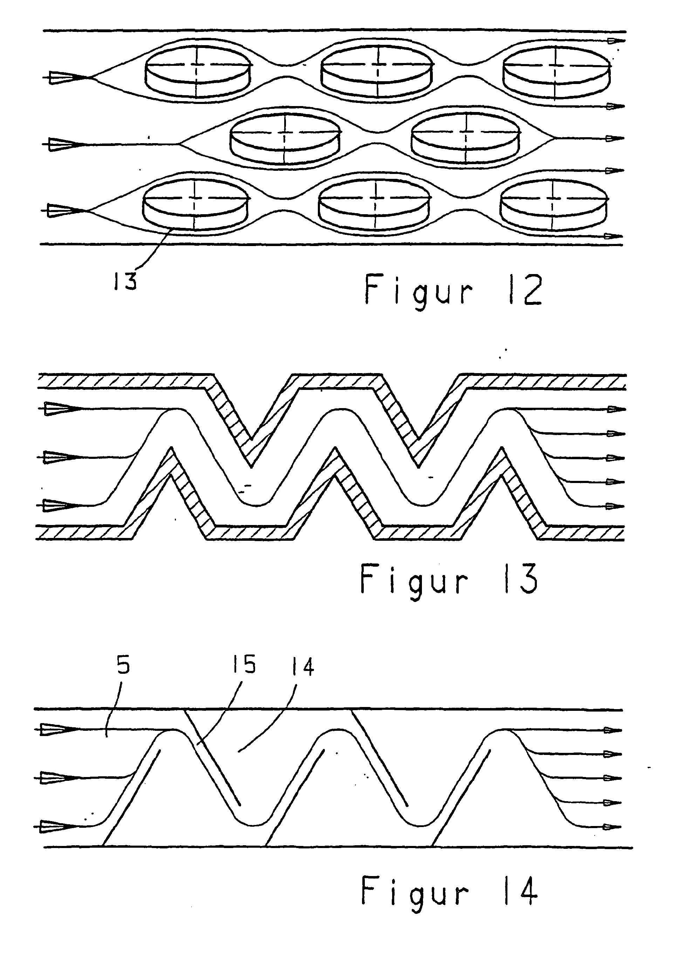

Eine nochmals verbesserte Struktur 13 des Partikelabscheiders 3 stellt die Ausführung nach Figur 13 dar. Durch ständige Umlenkung wird der Wandkontakt besonders innig, so daß ein hoher Abscheidegrad für Feinstpartikel erzielt wird.

Ein weiterer Mechanismus zur Partikelabscheidung ist die Diffusion. Unter Diffusion versteht man den Partikeltransport auf Grund von Konzentrationsunterschieden, wobei der Partikeltransport, analog zur Brown'schen Molekularbewegung, auf der statistischen Brown schen Partikelbewegung beruht. Durch Abscheidung von Partikeln an einer Oberfläche wird die Partikelkonzentration in der Gasphase an dieser Stelle Null, so daß sich ein Konzentrationsgefälle zwischen Oberfläche und umgebendem Gas ausbildet. Um die Diffusionsabscheidung zu verbessern werden nach Fig. 14 Totzonen 14 in der Strömung 5 geschaffen, wie sie z.B. im Windschatten von Leitblechen 15 entstehen. Dort geht die Strömungsgeschwindigkeit gegen Null, um eine längere Verweilzeit für die relativ langsam ablaufende Diffusion zu ermöglichen. Zudem kann die Diffusion durch verkürzte Diffusionswege verbessert werden, indem man den Querschnitt der Strömungskanäle verringert. So haben sich Querschnitte zwischen 25 µm² und 250 µm² als brauchbar erwiesen. Die Diffusion ist vor allem ein brauchbarer Weg Partikel < 30 nm abzuscheiden.

Zur Reduzierung des Stickoxidausstoßes bedient man sich der Abgasrückführung (AGR). Bei dieser wird ein Teil des Abgases in das Ansaugsystem zurückgeführt. Vor der Rückführung muß das Abgas jedoch einen Kühler durchlaufen. Dieser Kühler bietet eine Möglichkeit das erfindungsgemäße Verfahren in die AGR zu integrieren.

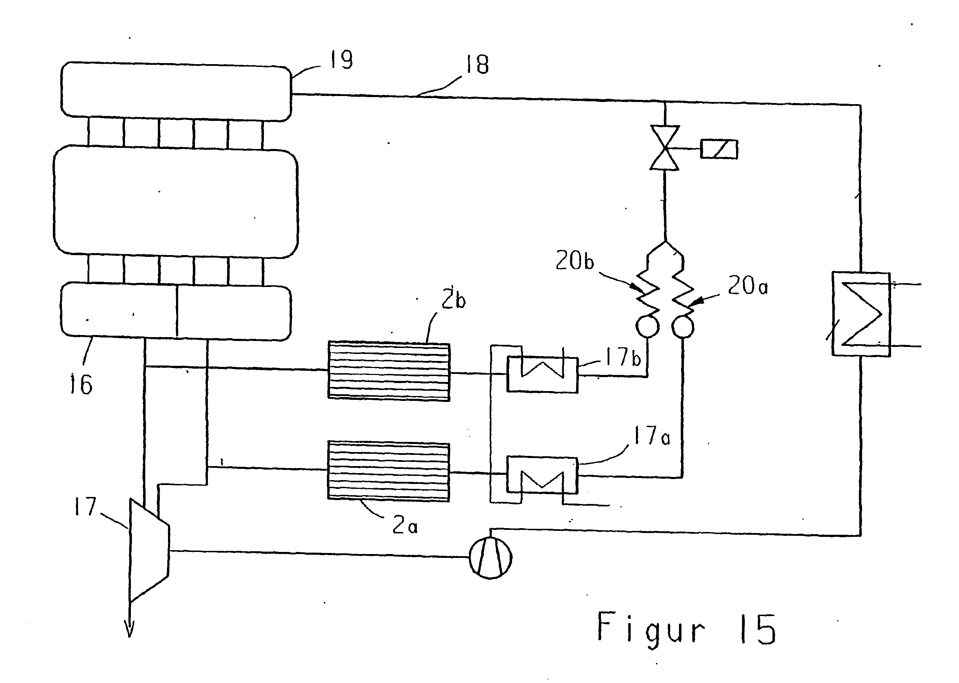

Fig. 15 zeigt diese besonders vorteilhafte Integration in die AGR.

Jeder Flut des zweiflutig ausgeführten Abgassammlers 16 eines aufgeladenen Dieselmotors wird vor der Turbine 17 ein Teilstrom entnommen. Dieser wird über die Oxidationskatalysatoren 2a, 2b geleitet, an denen NO zu NO₂ oxidiert wird. Anschließend wird das Abgas über je einen Kühler 17a, 17b geleitet, die das heiße Abgas auf ca. 40°C abkühlen. Die Kühler 17a, 17b können mit einer platinhaltigen Beschichtung versehen werden, um wie schon bei Fig. 3 erwähnt, die NO₂- Konzentration in Wandnähe anzuheben. Anschließend werden die Teilströme in der Ladeluftleitung 18 zusammengeführt und ins Saugrohr 19 geleitet. Sogenannte Flatterventile 20a, 20b sollen Druckschwingungen im Abgastrakt zur Überwindung der Druckdifferenz zwischen Abgasdruck und Ladeluftdruck ausnützen und Rückströmungen verhindern. Durch die kontinuierliche Oxidation der an den Kühlern 17a, 17b abgeschiedenen Partikel wird ein Versotten der Kühler und damit ein Rückgang der Kühlleistung verhindert. Zudem werden nachgeschaltete Komponenten, wie Flatterventile, Saugrohr, Einlaßventile frei von Partikelablagerungen gehalten und so ihre Lebensdauer verlängert.

Eine weitere Möglichkeit zur Ausbildung einer Temperaturdifferenz zwischen Oberfläche und Abgasstrom ist das Eindüsen einer wässrigen Lösung in den heißen Gasstrom vor dem thermophoretischen Partikelabscheider 3, der in die Kühler 17a, 17b entsprechend Fig. 3 integriert sein kann. Trifft diese Lösung auf die Oberfläche, verdampft das Wasser, so daß durch die auftretende Verdampfungskühlung, die Oberflächentemperatur abgesenkt wird.

Die nachfolgend beschriebenen Untersuchungen an Motorenprüfständen sollen das beschriebene Verfahren und die Ausführungsbeispiele näher erläutern:

Zur Abgaserzeugung diente ein 12 L-Sechszylinder-Dieselmotor, Typ MAN 2866 LF20, 400 PS in EURO II Ausführung. Um die Partikelemissionen zukünftiger Motoren zu simulieren, wurde der Einspritzbeginn nach früh verstellt, wodurch die NOx-Emissionen auf 10 g NOₓ/kWh anstiegen. Die Partikelemissionen betrugen 0,11 g Partikel/kWh, der maximale Abgasmassenstrom 1800 kg/h. Die Abgastemperaturen betrugen 230°C - 480°C. Das Gesamtvolumen der Systeme wurde auf maximal 24L beschränkt, um die Einbaufähigkeit in handelsübliche Lkw's zu gewährleisten.

### Ausführungsbeispiel 1 ( Abscheidung durch Thermophorese )

Das Abgas wurde zuerst über einen platinhaltigen Katalysator, Volumen 4L und anschließend durch einen wassergekühlten Rohrbündelwärmetauscher, Wärmetauscherfläche 20 m² geleitet ( vgl. Figur 1 ). Die mittlere Kühlmitteltemperatur betrug 65°C.

### Ausführungsbeispiel 2 ( Abscheidung durch Konvektion )

Aufbau wie Ausführungsbeispiel 1, der Rohrbündelwärmetauscher wurde jedoch durch einen unbeschichteten metallischen Katalysatorträger mit gewellter Oberfläche ( W. Held et al., SAE-Paper series, 940932) ersetzt. Das Trägervolumen betrug 20L.

### Ausführungsbeispiel 3 ( Diffusion )

Aufbau wie Ausführungsbeispiel 1, der Rohrbündelwärmetauscher wurde jedoch durch einen unbeschichteten metallischen Katalysatorträger mit extrem engen Strömungskanälen (900 cpsi) ersetzt (WO 91/16970). Das Trägervolumen betrug 20L.

### Ausführungsbeispiel 4 ( Kombination von Konvektionsabscheidung und NO₂-Erzeugung )

Partikelabscheidung und NO-Oxidation wurden zusammengefaßt, indem der in Ausführungsbeispiel 2 verwendete metallische Katalysatorträger mit einem platinhaltigen Washcoat versehen wurde.

### Ausführungsbeispiel 5 ( Kombination von thermophoretischer Abscheidung und NO₂-Erzeugung )

Der im Ausführungsbeispiel 1 verwendete wassergekühlte Rohrbündelwärmetauscher wurde mit einem platinhaltigen Washcoat beschichtet, um an den Rohrwandungen gleichzeitig hohe Partikel- und NO₂-Konzentrationen zu erzeugen.

Zum Vergleich wurde das in US 4,902,487 beschriebene filternde System vermessen, wobei das Katalysatorvolumen 4 Liter, das Filtervolumen 45 Liter betrug.

Als Anhaltspunkt für übliche Abgasgegendrücke von Abgasanlagen wurde in die nachfolgende Tabelle eine Standardabgasanlage mit aufgenommen.

**Tabelle 1:**

| Vergleich der Partikelreduktion und Abgasgegendrücke der einzelnen Verfahren | | |
|---|---|---|
| **Ausführungsbeispiel** | **Partikelreduktion** (%) | **Abgasgegendruck** (mbar) |
| 1 | 45 | 100 |
| 2 | 35 | 60 |
| 3 | 30 | 90 |
| 4 | 40 | 50 |
| 5 | 55 | 90 |
| US 4,902,487 | 80 | 300 |
| Standardabgasanlage | 0 | 60 |

Wie der Tabelle zu entnehmen ist, erreicht das filternde Verfahren US 4,902,487 zwar die größte Partikelreduktion. Es muß jedoch berücksichtigt werden, daß das filternde System fast doppelt so groß ist und zudem dessen Abgasgegendruck deutlich über denen der Ausführungsbeispiele lag.

## Patentansprüche

1. Verfahren zur Abscheidung von Feinstpartikeln aus dem Abgas von Brennkraftmaschinen, bei der das NO-haltige Abgas an einem platinhaltigen Oxidationskatalysator (2) zu NO₂ aufoxidiert wird und das mit NO₂ angereicherte Abgas in Kontakt mit einem Partikelabscheider (3) gebracht wird, der katalytisch beschichtet sein kann, **dadurch gekennzeichnet, dass** der Partikelabscheider (3) zur filterlosen Abscheidung die Effekte der Thermophorese in Kombination mit der Konvektion und der Diffusion nutzt, wobei die Partikel (9)
- durch Thermophorese an Oberflächen (6), die kälter als der Abgasstrom sind, abgeschieden werden und zur Kühlung der Oberflächen (6) als Kühlmedium eine Flüssigkeit eingesetzt wird,
- durch Konvektion mit Hilfe von strukturierten Oberflächen (13) und/oder auf Grund von wiederholtem Umlenken der Strömung abgeschieden werden,
- durch Diffusion in Strömungstotzonen abgeschieden werden.

## Claims

1. A method of separating very fine particles from the exhaust gas of internal-combustion engines, in which the NO-containing exhaust gas is oxidized on a platinum-containing oxidation catalyst (2) to form NO₂ and the exhaust gas enriched with NO₂ is brought into contact with a particle separator (3) which can be coated catalytically, **characterized in that** the particle separator (3) uses the effects of thermophoresis in combination with convection and diffusion for the purpose of separation without filters, wherein the particles (9) are separated by thermophoresis on surfaces (6) which are colder than the exhaust-gas flow, and a liquid is used as a cooling medium in order to cool the surfaces (6), are separated by convection with the aid of structured surface (13) and/or on the basis of repeated reversal of the flow, are separated by diffusion in dead zones of flow.

## Revendications

1. Procédé pour la séparation de particules fines des gaz d'échappement d'un moteur à combustion interne, selon lequel les gaz d'échappement contenant du NO sont oxydés en NO₂ au contact d'un catalyseur d'oxydation (2) contenant du platine et les gaz d'échappement enrichis en NO₂ sont mis en contact avec un séparateur de particules (3) qui peut présenter un revêtement catalytique, **caractérisé en ce que**
- le séparateur de particules (3) utilise, pour une séparation sans filtre, les effets de la thermophorèse en combinaison et avec la diffusion.
- les particules (9) sont séparées par thermophorèse au contact de surfaces (6) qui sont plus froides que le courant des gaz d'échappement et pour le refroidissement des surfaces (6) on utilise un liquide comme milieu de refroidissement.
- les particules (9) sont séparées par convection à l'aide de surfaces (13) structurées et/ou par des déviations répétées de l'écoulement, par diffusion dans des zones mortes d'écoulement..
